# EUROPEAN PATENT APPLICATION

(11) **EP 4 722 527 A1**
(43) Date of publication of application: **08.04.2026**
(21) Application number: 24383082.5
(22) Date of filing: 07.10.2024
(51) Int. Cl.: F03D 1/00, F03D 13/10

(54) **INSTALLATION ASSEMBLY**

(71) Applicant: Siemens Gamesa Renewable Energy Innovation & Technology S.L., 31621 Sarriguren (Navarra) (ES)
(72) Inventor: Roman Barriopedro, Daniel, 28010 Madrid (ES); Gutierrez Martinez, Miguel Angel, 39800 Ramales de la Victoria (ES)
(74) Representative: SGRE-Association

(57) **Abstract**

The invention describes an installation assembly (1) for use in installing a secondary nacelle structure (20S) underneath a wind turbine nacelle (20), which installation assembly (1) comprises a winch assembly comprising at least a winch cable (16) and a winch (18); a means (10, 11) of connecting the winch cable (16) to the secondary nacelle structure (20S); a bracket (12) adapted for installation at the mounting height of the secondary nacelle structure (20S); and a means (10, 102, 122, 14) of connecting the bracket (12) to the secondary nacelle structure (20S) after raising the secondary nacelle structure (20S) to its mounting height using the winch assembly (16, 18). The invention further describes a method of mounting a secondary nacelle structure (20S) underneath a wind turbine nacelle (20) using a number of such installation assemblies (1).

## Description

### Background

A wind turbine generally comprises a nacelle mounted on top of a tower, with an aerodynamic rotor - a hub and rotor blades - mounted at the front of the nacelle. The purpose of the nacelle is to protect the drivetrain, a yaw system and various other components from the environment. The drivetrain, all components and the nacelle itself are usually carried by a bedframe or support structure. The dimensions and mass of the drivetrain, generator, converter, cooling systems etc., increase with the output power capacity of the wind turbine, so that a larger nacelle is needed to accommodate these components.

However, the width and height of a nacelle are generally kept within certain limits to avoid disturbing the incoming airflow. Furthermore, the length of the nacelle is also limited by structural requirements. For these reasons, it is becoming a challenge at present to house wind turbine components inside a single nacelle.

To overcome this problem, various solutions have been proposed. For example, the nacelle can be constructed to also extend downward behind the tower, adding one or more "levels" to its interior space. However, such a nacelle is expensive to construct and adds significantly to the overall cost of energy. Another problem with this approach is that the dimensions of the nacelle are fixed from the outset, effectively placing a restriction on the dimensions of any component that may need to be added during the service life of the wind turbine.

In another approach, it is known to suspend an auxiliary housing unit from the nacelle. The auxiliary housing unit can enclose one or more components, and can be bolted to a bedframe. The advantage of such an auxiliary housing unit is that it can be exchanged as necessary during the service life of the wind turbine, for example when a larger housing unit is needed to house larger components.

However, mounting such an auxiliary housing unit to the nacelle of a wind turbine is an expensive procedure, since it requires a crane to raise the auxiliary housing unit to the required height. Particularly in the case of an already existing offshore wind turbine installation, mounting or exchanging such an auxiliary housing unit can be prohibitively expensive if the procedure requires a jackup vessel and a sufficiently large crane.

Alternatively, such an auxiliary housing unit could be lifted using an on-board crane installed in or on the nacelle. However, such an approach can be expensive and hazardous to implement, since it is difficult to bring the auxiliary housing unit into correct alignment with the underside of the nacelle as long as it is suspended from the crane, particularly in high wind conditions.

It is therefore an object of the invention to provide a way of overcoming the problems outlined above.

This object is achieved by the claimed installation assembly, by the claimed wind turbine and by the claimed method of mounting a secondary nacelle structure underneath a wind turbine nacelle.

### Description

The claimed installation assembly is intended for use in lifting a secondary nacelle structure to its mounting height underneath a wind turbine nacelle, and mounting the secondary nacelle structure to a rear support structure of the wind turbine nacelle.

According to the invention, the installation assembly comprises a winch assembly comprising at least a winch cable and a winch; a means of connecting the winch cable to the secondary nacelle structure; a bracket adapted for installation to a rear support structure of the wind turbine nacelle, i.e. the bracket is adapted for installation at the mounting height of the secondary nacelle structure; and a means of connecting the bracket to the secondary nacelle structure once the secondary nacelle structure has been raised by the winch assembly to its mounting height.

According to the invention, the method of mounting a secondary nacelle structure underneath a wind turbine nacelle comprises an initial step of providing a number of such installation assemblies, for example two such installation assemblies. In a preparatory step, each bracket is installed at the intended mounting height of the secondary nacelle structure. The winch cables are connected to the secondary nacelle structure and the winch assemblies are set up so that, when the winch motors are simultaneously actuated, the winches raise the secondary nacelle structure in a controlled and steady manner to its mounting height underneath the wind turbine nacelle.

An advantage of the invention is that it facilitates a fast and safe mounting procedure in which a secondary nacelle structure can be suspended in a highly robust manner from underneath the nacelle of a wind turbine, without the need for any crane. Since cranes are not required, the cost of mounting a secondary nacelle structure (or exchanging an existing one for a replacement structure) can be kept favourably low.

According to the invention, the wind turbine comprises a rear support extending outward from the top of a tower; a nacelle mounted on the rear support; and a secondary nacelle structure mounted underneath the nacelle and attached to the rear support by means of a number of connector assemblies, wherein each connector assembly comprises at least the bracket of such an installation assembly, connected to the secondary nacelle structure.

Particularly advantageous embodiments and features of the invention are given by the dependent claims, as revealed in the following description. Features of different claim categories may be combined as appropriate to give further embodiments not described herein.

As explained above, all components are carried by a supporting structure, made for example from steel. The supporting structure can comprise a bedframe constructed to carry the weight of the drivetrain, and a rear support structure connected to the bedframe. The rear support structure extends behind the tower and carries the weight of the nacelle and various other components. A rear support structure can be constructed in any manner, for example to comprise a framework of steel I-beams, and may be referred to simply as a "rear support" in the following. The rear support of a large wind turbine can extend outward beyond the tower to a distance in the order of 13 m, for example.

The secondary nacelle structure or "secondary unit" is mounted to the underside of the nacelle, by connecting it to the rear support using the inventive method. In the following, it may be assumed that a secondary nacelle structure is loaded with any of: an electrical component such as a transformer unit, a converter unit, an energy storage unit, or other components such as a hydrolyser, a small service crane for use during a later maintenance procedure, etc. The mass of such a "loaded" secondary unit can be in the order of up to 25 metric tons.

Since the invention allows raising a loaded secondary unit to the level of the nacelle, i.e. the heavy equipment is already mounted inside the secondary unit, the secondary unit should be constructed in a suitably robust manner, for example the secondary unit can be similar in construction to an intermodal shipping container, comprising a rigid steel frame enclosed by a floor, a roof, and side panels.

Each installation assembly comprises a winch cable and a motor-driven winch, and can also comprise various pulleys which can be mounted temporarily at suitable positions, for example some distance above the mounting height of the secondary nacelle structure. The winch can be mounted at any suitable location, for example near the top of the tower. However, in a particularly preferred embodiment of the invention, each winch is mounted near the base of the tower, for example on a platform at the base of the tower. In such a configuration, the length of the winch cable is at least twice the height of the wind turbine tower. The pulleys serve to guide a winch cable during the lifting procedure. Preferably, each installation assembly comprises at least two pulleys, each mounted some distance above the rear support. For example, a first pulley can be mounted above the bracket of that installation assembly, and a second pulley can be mounted above the winch of that installation assembly.

The winch cable can be connected to the secondary nacelle unit in any suitable manner. For example, the winch cable can terminate in a hook, and the secondary nacelle unit can incorporate a suitable fitting such as a shackle that allows the hook to be secured during the lifting procedure. Alternatively, the winch cable can terminate in a fitting that is bolted to the secondary nacelle unit during the lifting procedure. However, in a particularly preferred embodiment of the invention, the installation assembly comprises a lifting casting provided in the secondary nacelle structure, and the winch cable terminates in a lifting connector which is shaped to engage with the lifting casting.

The lifting casting is preferably incorporated in the structure of the secondary unit, for example it may be welded to the top of an upper horizontal frame section of the secondary unit. The lifting casting and lifting connector are preferably designed and constructed to give a tight and reliable fit when engaged. For example, the lifting casting and lifting connector can be constructed to engage in the manner of a twistlock system. To facilitate "mating" with the lifting connector, the lifting casting is preferably constructed to comprise an aperture shaped to receive a lifting connector in a first orientation and to accommodate the lifting connector in a second orientation. The first and second orientations can differ by 90°, i.e. a quarter rotation of the lifting connector.

In a configuration with two lifting castings, these are preferably positioned so that the centre of mass of the secondary unit and the lifting castings lie in the same vertical plane during a lifting procedure.

Once raised to the height of the rear support, the secondary unit is secured to the rear support by attaching the lifting casting to the bracket. This could be done in various ways, as will be known to the skilled person. In a particularly preferred embodiment of the invention, the lifting casting comprises a plurality of tapped holes and the bracket comprises a corresponding arrangement of through-holes, so that threaded fasteners such as hex-headed bolts can be inserted from the bracket and tightened in the lifting casting.

An advantage of such a robust connection is that it allows the secondary nacelle unit to contribute to the stiffness of the rear support structure. The stiffness of the combined structure - i.e. the rear support together with the secondary unit - can exceed the stiffness of the rear support alone. In this way, the inventive lifting arrangement serves a dual purpose - it provides a way of lifting a secondary unit without the need for a crane, and it also provides a way of increasing the stiffness of the rear support. The desired increase in stiffness can be achieved by choosing suitable dimensions for the contact faces of the lifting casting and the bracket, and by joining these parts by a suitable number of sufficiently large threaded fasteners.

The secondary unit is preferably constructed so that its width is similar to the width of the rear support. In a preferred embodiment, two lifting castings are incorporated in the top of the secondary unit, one on each outer edge of the unit; and a corresponding arrangement of two brackets is prepared, for example by welding the brackets to steel girders or beams of the rear support, thereby placing the brackets to align with the lifting castings.

The bracket of an installation assembly can be constructed in any suitable fashion. In a preferred embodiment of the invention, the bracket is made from steel plate and comprises a pair of vertical side plates on either side of one or more horizontal plates. These plates can be welded together, and the bracket itself can be welded to the rear support as indicated above. The plates have a suitable thickness, for example 20 mm.

The lifting casting can be placed so that, when the winch apparatus has raised the secondary unit to its mounting height, the bracket is positioned over a connection interface which is also provided on top of the secondary unit. However, in a preferred embodiment of the invention, the winch cable is guided through the bracket, so that the lifting casting is brought directly underneath the bracket. This configuration has the advantage that the lifting casting itself can be used to connect the secondary unit to the bracket.

During a final stage of the lifting procedure, a lifting casting approaches its bracket, and it is now important to ensure that holes for fasteners are correctly aligned. In a preferred embodiment of the invention, some means of correcting the position of the secondary unit is provided. For example, an apparatus configured to "nudge" the secondary unit in a desired lateral direction can be installed on the rear support and actuated as required.

Alternatively, alignment can be encouraged by a suitable design of the bracket. As explained above, the winch cable preferably extends through the bracket. In a preferred embodiment of the invention, the bracket comprises a first aperture formed in a lower horizontal plate, and a second aperture formed in an upper horizontal plate and aligned with the first aperture. Preferably, both apertures are circular openings which have the same diameter. The winch cable passes through both apertures, which act to guide the winch cable through the bracket and to bring the lifting casting into place below the bracket. The apertures must be large enough so that, after completion of the procedure, the lifting connector can be removed from the lifting casting which, at that stage, is connected to the bracket. However, since the apertures must be large enough to allow the lifting connector to pass through, the result can be a slight misalignment of the lifting castings and brackets. Therefore, in a particularly preferred embodiment of the invention, the installation assembly comprises an alignment tool which is assembled about the winch cable and which rests on the lifting connector. When assembled, this alignment tool has a truncated cone shape centred about the winch cable, and its largest diameter is only slightly less than the diameter of a bracket aperture. When the winch cable pulls the lifting connector through the bracket apertures, the alignment tool automatically aligns the winch cable centrally in the bracket apertures, so that the lifting casting is automatically aligned with the bracket. It follows that any connecting parts of the lifting casting and the bracket are correctly aligned. For example, all through-holes of the bracket are now correctly aligned with the corresponding tapped holes of the lifting casting.

Once the bracket and lifting casting are aligned, the connection procedure can commence. At this stage, the weight of the secondary unit is still carried by the winch assemblies, i.e. the lifting connectors are fully loaded. However, tension in a winch cable will decrease while the weight of the secondary unit is transferred to the rear support, which happens when fasteners are being tightened to attach a bracket to its lifting casting. As a result, the lifting connector might turn and detach from the lifting casting, which can be potentially hazardous if the bracket is not yet mounted to the lifting casting. Therefore, in a particularly preferred embodiment of the invention, the installation assembly comprises a locking wedge that can be inserted between the horizontal plates of the bracket. The purpose of the locking wedge is to act as a temporary connection between the bracket and the load (i.e. the secondary nacelle structure), while the permanent connection is being made. In a particularly preferred embodiment of the invention, the locking wedge is also shaped to fit about the end of the lifting connector that extends vertically upward into the bracket. In addition to its function as a temporary connection between bracket and load, the locking wedge can also prevent any unwanted rotation of the lifting connector. In a further preferred embodiment of the invention, the lifting connector is shaped to include a collar about its upper end, so that this collar or flange rests on the locking wedge.

Once the secondary nacelle structure has been mounted underneath the wind turbine nacelle by connecting each bracket to a lifting casting, the lifting connectors are removed from the lifting castings and the winch assemblies can be dismantled and removed.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figures 1 - 3 show stages during the inventive method;
Figures 4 - 8 show details of an embodiment of the inventive installation assembly;
Figure 9 shows a secondary unit secured to the rear support of a wind turbine nacelle after completion of the inventive mounting procedure;
Figures 10 - 12 details of a further embodiment of the inventive installation assembly.

In the diagrams, like numbers refer to like objects throughout. Objects in the diagrams are not necessarily drawn to scale.

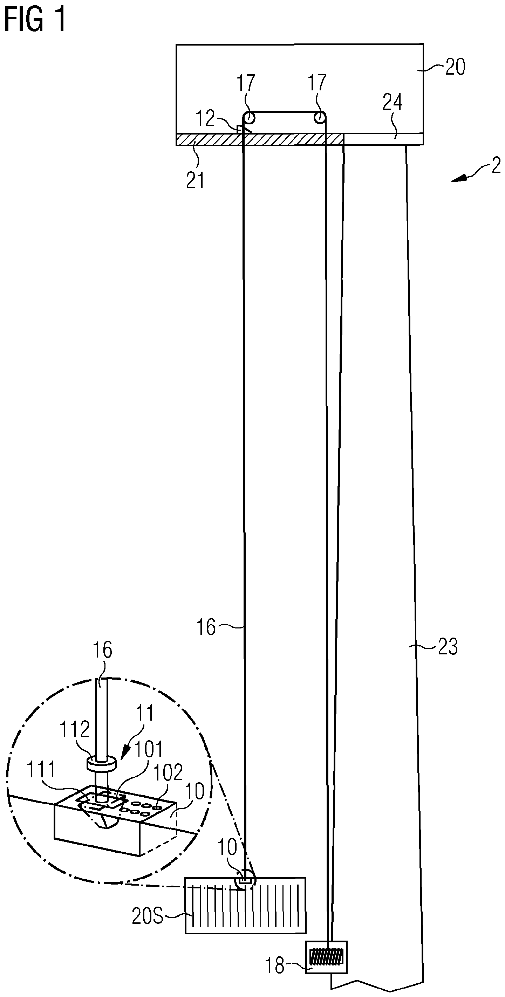

Figures 1 - 3 show stages during the inventive method of raising a secondary nacelle structure 20S for mounting underneath the nacelle 20 of a wind turbine 2. Ghost lines are used to indicate the nacelle 20 and the wind turbine tower 23. The diagrams show a rear support 21 of the nacelle 20, extending behind the tower 23. The rear support 21 serves to support heavy components of the wind turbine such as generator 22. The diagrams also indicate a bedplate 24 for mounting on top of the tower 23, shaped to accommodate yaw drive units.

At the stage shown in Figure 1, the secondary nacelle structure 20S is being prepared for the lifting procedure. At this stage, the secondary nacelle structure 20S can rest on a means of support (not shown). At two points on the upper side of the secondary nacelle structure 20S, lifting castings 10 are incorporated in the structure of the secondary nacelle structure 20S. A lifting connector 11 engages with each lifting casting 10 as shown in the enlarged portion. Although shown here in a very simplified manner, the lifting connector shall be understood to be constructed so that, once it is engaged with a lifting casting, it will not rotate until it is once again released (e.g. in the manner of a twistlock system). As explained above, the lifting casting 10 and lifting connector 11 can engage in the manner of a twistlock system.

Each lifting connector 11 is attached to or formed at the end of a winch cable 16 which is arranged to pass through openings in a bracket 12 secured to the rear support 21, over one or more pulleys 17 installed above the rear support 21, and then back down to a winch 18 installed at a lower level, in this case at the base of the tower 23.

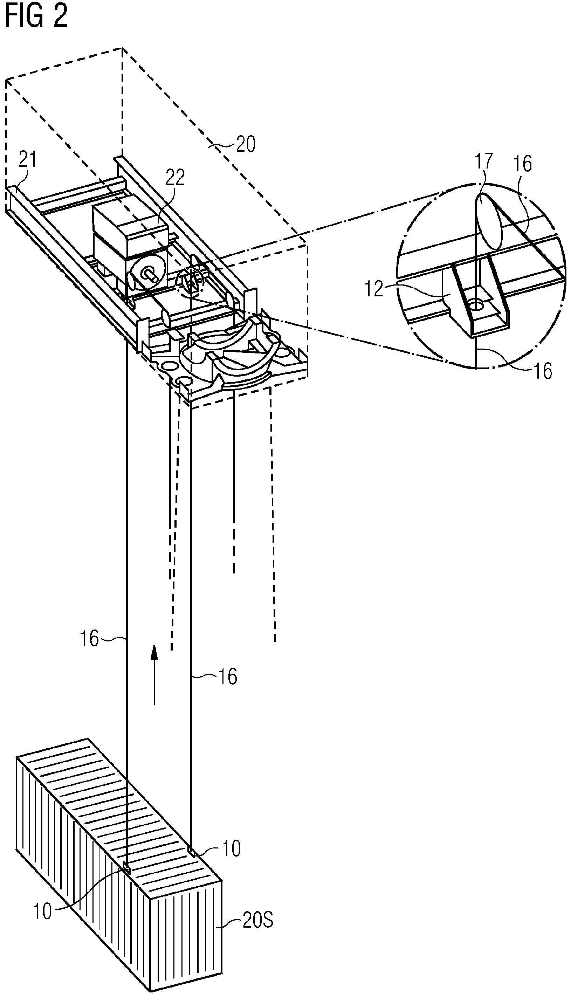

In Figure 2, the winches 18 are actuated to raise the secondary nacelle structure 20S towards the rear support 21. Since each winch cable 16 passes through a bracket 12, the corresponding lifting casting 10 automatically aligns with its bracket 12.

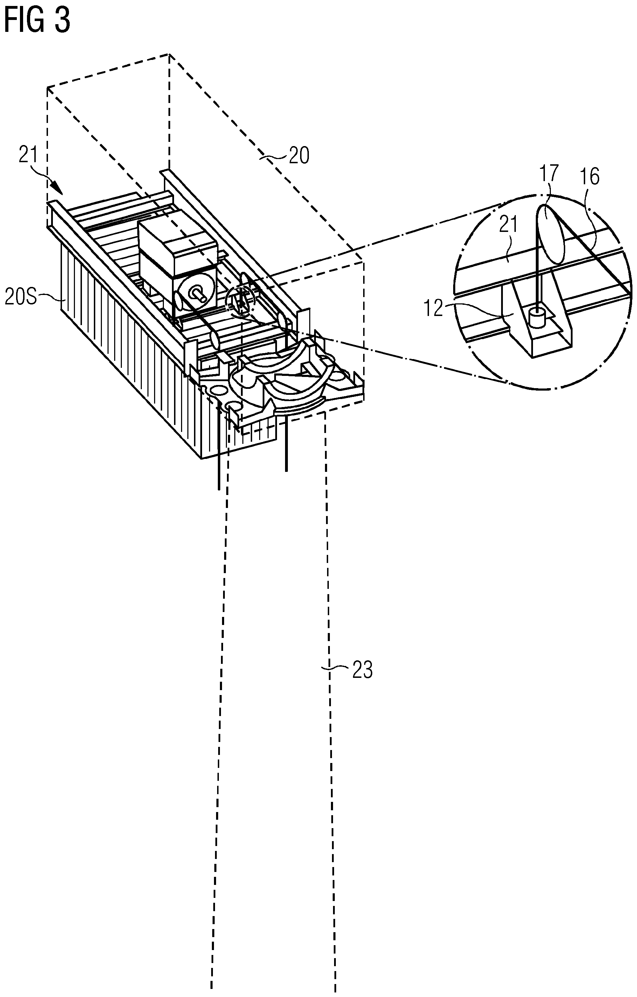

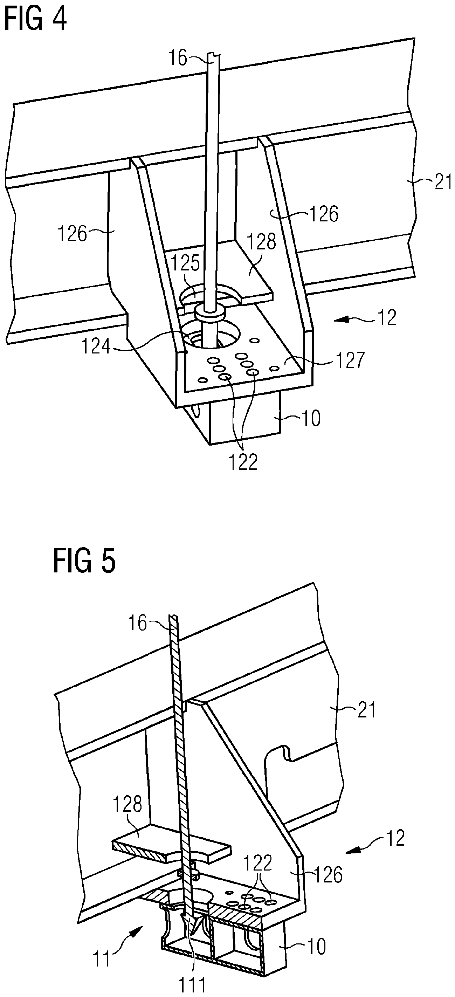

In Figure 3, the secondary nacelle structure 20S has reached the underside of the rear support 21, and the lifting castings 10 can be connected to their respective brackets 12, in a procedure which is illustrated in Figures 4 - 7.

Because the inventive mounting procedure is relatively straightforward and does not require a large crane or a jackup vessel, each wind turbine of an offshore wind farm can be "upgraded" at a favourably low cost by installing any required component or replacement component in a secondary unit and connecting it as described above.

Figures 4 and 5 show a lifting connector 11 at its highest point, i.e. it has raised the respective lifting casting 10 to abut the bracket 12. Figure 4 shows several bores 122 in the bracket 12, which align with tapped holes 102 formed in the lifting casting 10, and through which bolts 14 will be inserted to fasten the bracket 12 to the lifting casting 10. Figure 5 is a cut-away view that shows the lifting connector 11 engaged with the lifting casting 10, which is now directly underneath the bracket 12.

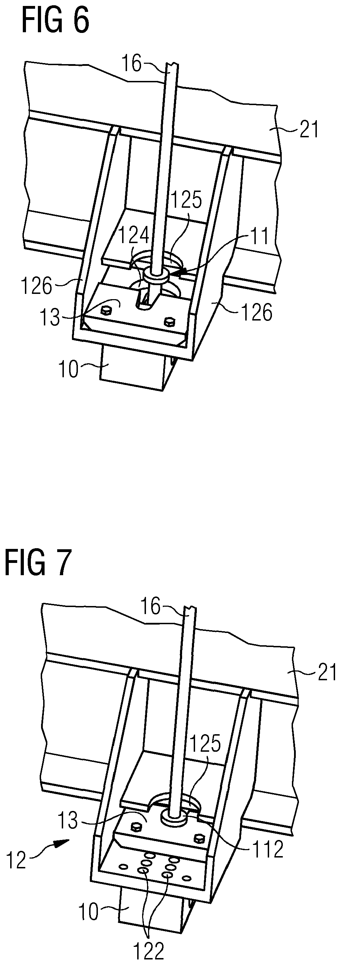

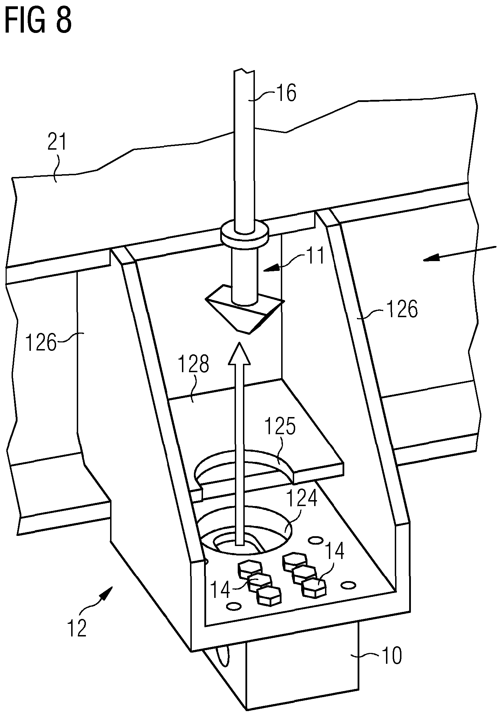

The bracket 12 can now be secured to the lifting casting 10. During this procedure, in which workers will manually insert fasteners though the brackets 12, it is important that the lifting connectors 11 remain securely in place while the weight of the secondary nacelle structure 20S is gradually being transferred from the installation assembly 1 to the rear support 21. As tension in the winch cable 16 decreases when weight is being transferred to the rear support 21, the lifting connector 11 may move and turn, but a premature release could be extremely hazardous to personnel. To this end, as shown in Figure 6, a locking wedge 13 is pushed under the collar 112 of the lifting connector 11. The locking wedge 13 prevents any rotational movement of the lifting connector 11 while the lifting casting 10 is being secured to the bracket 12. This is done by inserting threaded fasteners 14, e.g. hex-headed bolts, through the holes 122 in the bracket 12 and into the tapped holes 102 of the lifting casting 10 as indicated in Figure 8. Once the bolts 14 have all been tightened, the weight of the secondary nacelle structure 20S is carried by the rear support 21 and the lifting connector 11 can be removed as shown. To this end, the locking wedge 13 is removed so that the lifting connector 11 (now freely hanging and no longer under tension) can be turned through 90° and pulled out of the lifting casting 10. The winch assemblies can now be dismantled and removed.

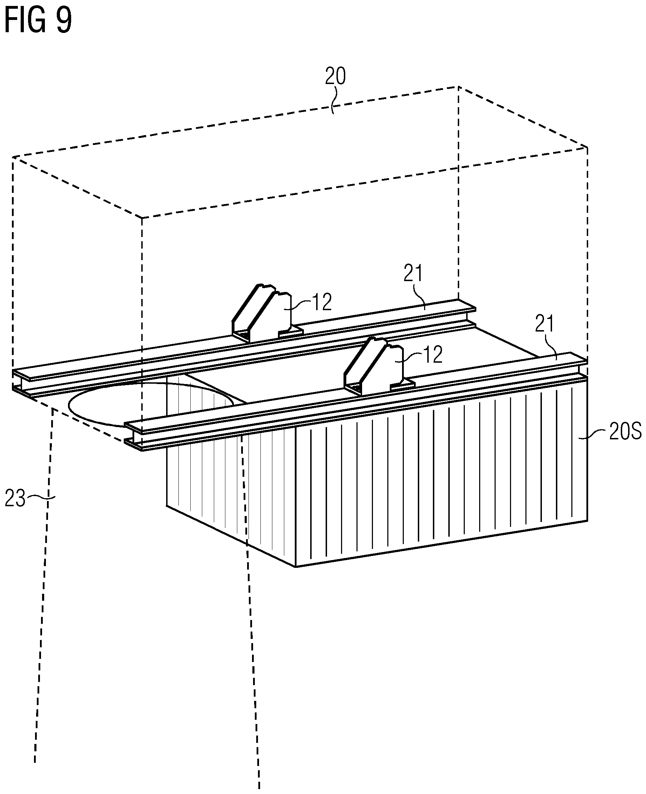

Figure 9 shows the secondary nacelle structure 20S secured to the rear support 21 after completion of the mounting procedure. The added load of the secondary nacelle structure 20S is transferred effectively through the robust connections between lifting castings 10 and brackets 12.

While Figure 9 shows only two such connections, it shall be understood that the connection between the secondary nacelle structure 20S and the rear support 21 can be augmented by supplementary fastening arrangements, for example towards the rear of the secondary nacelle structure 20S. A supplementary fastening arrangement can be made by providing an appropriately formed casting on top of the secondary nacelle structure 20S, with tapped holes to receive fasteners, and installing a complementary part on the rear support 21. After completing the hoisting and connecting steps as described above (in which the installation assembly is deployed to join the lifting castings 10 and brackets 12), the supplementary fastening arrangements can be completed by connecting the relevant parts. Equally, for a less heavy load, the connection between a secondary nacelle structure and the rear support can be achieved using only a single lifting assembly, i.e. a single bracket connected to the secondary nacelle structure.

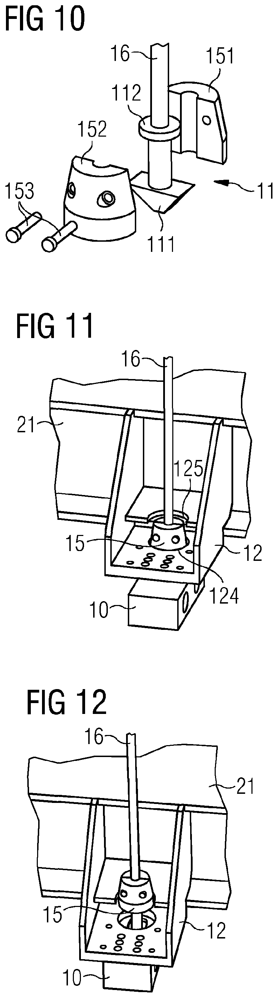

Figures 10 - 12 show an alternative embodiment of the inventive installation assembly 1, which can assist in aligning the secondary nacelle structure 20S more accurately during the final "docking" stage. As shown in Figure 10, an alignment cone 15 is assembled from two parts 151, 152 about the winch cable 16. The alignment cone 15 is shaped so that, in its assembled state, it sits on the collar 112 of the lifting connector 11. In Figure 11, the secondary nacelle structure 20S is approaching the rear support 21 and the alignment cone 15 is passing through the first bracket aperture 124. As shown in Figure 12, the alignment cone 15 is passing through the second bracket aperture 125. In this way, the alignment cone 15 ensures that the winch cable 16 aligns with the centres of the bracket apertures 124, 125 and helps avoid a situation in which even a slight offset would result in misalignment of the bracket bores 122 and tapped holes 102 of the lifting casting 10. At the stage shown in Figure 12, the secondary nacelle structure 20S has been raised to its final height and the lifting castings 10 are positioned accurately underneath the brackets 12 so that these parts can be connected as explained in Figures 6 and 7, whereby the alignment cone 15 can be removed before pushing the locking wedge 13 into place.

Although the present invention has been disclosed in the form of preferred embodiments and variations thereon, it will be understood that numerous additional modifications and variations could be made thereto without departing from the scope of the invention. For example, there are various possible ways in which to realise the geometries of the bracket and casting, to realise the self-alignment of the casting relative to the bracket, to prevent rotation of the lifting connector in the lifting casting, etc.

For the sake of clarity, it is to be understood that the use of "a" or "an" throughout this application does not exclude a plurality, and "comprising" does not exclude other steps or elements. Any pronoun denoting a specific gender shall be understood to apply equally to any gender identity.

## Claims

1. An installation assembly (1) for use in installing a secondary nacelle structure (20S) underneath a wind turbine nacelle (20), which installation assembly (1) comprises
- a winch assembly comprising at least a winch cable (16) and a winch (18);
- a means (10, 11) of connecting the winch cable (16) to the secondary nacelle structure (20S);
- a bracket (12) adapted for installation at the mounting height of the secondary nacelle structure (20S); and
- a means (10, 102, 122, 14) of connecting the bracket (12) to the secondary nacelle structure (20S) after raising the secondary nacelle structure (20S) to its mounting height using the winch assembly (16, 18).

2. An installation assembly according to the preceding claim, comprising
- a lifting casting (10) adapted for inclusion in the secondary nacelle structure (20S); and
- a lifting connector (11) at the end of the winch cable (16), which lifting connector (11) is shaped to engage with the lifting casting (10).

3. An installation assembly according to the preceding claim, wherein the lifting casting (10) comprises an aperture (101) shaped to receive a lifting connector (11) in a first orientation and cavity shaped to accommodate the lifting connector (11) in a second orientation.

4. An installation assembly according to claim 2 or claim 3, comprising
- a plurality of tapped holes (102) formed in the lifting casting (10);
- a corresponding arrangement of through-holes (122) formed in the bracket (12); and
- a corresponding number of threaded fasteners (14) for connecting the bracket (12) to the lifting casting (10) after completion of a lifting procedure.

5. An installation assembly according to any of the preceding claims, comprising a means (15) of aligning the secondary nacelle structure (20S) with the bracket (12) during the lifting procedure.

6. An installation assembly according to any of the preceding claims, wherein the bracket (12) comprises
- a pair of vertical side plates (126) on either side of a lower plate (127) and an upper plate (128);
- a first aperture (124) formed in the lower plate (127); and
- a second aperture (125) formed in the upper plate (128), which second aperture (125) is aligned with the first aperture (124).

7. An installation assembly according to any of the preceding claims, comprising a locking wedge (13) shaped for insertion between the lower plate (127) and the upper plate (128) of the bracket (12) and shaped to enclose a lifting connector (11) .

8. An installation assembly according to the preceding claim, wherein the lifting connector (11) comprises a collar (112) positioned to rest on the locking wedge (13) during a connecting procedure.

9. An installation assembly according to any of the preceding claims, wherein the winch (18) is mounted at the base of the tower (23) of the wind turbine (2).

10. A wind turbine (2) comprising
- a rear support (21) extending outward from the top of a tower (23);
- a nacelle (20) mounted on the rear support (21);
- a secondary nacelle structure (20S) mounted underneath the nacelle (20) and attached to the rear support (21) by means of a number of connector assemblies (10, 12), wherein each connector assembly (10, 12) comprises at least a bracket (12) of the installation assembly (1) according to any of claims 1 to 9.

11. A wind turbine according to the preceding claim, wherein the secondary nacelle structure (20S) accommodates any of: a transformer unit, a converter unit, an energy storage unit.

12. A method of mounting a secondary nacelle structure (20S) underneath a wind turbine nacelle (20), which method comprises
- providing a number of installation assemblies (1) according to any of claims 1 to 9;
- installing the bracket (12) of each installation assembly (1) at the mounting height of the secondary nacelle structure (20S);
- connecting the winch cable (16) to the secondary nacelle structure (20S); and
- actuating the winch (18) of each installation assembly (1) to raise the secondary nacelle structure (20S) to its mounting height underneath the wind turbine nacelle (20).

13. A method according to the preceding method claim, comprising preparatory steps of
- incorporating a lifting casting (10) of each installation assembly (1) in the secondary nacelle structure (20S);
- attaching a lifting connector (11) to the end of each winch cable (16); and
- engaging each lifting connector (11) with each lifting casting (10).

14. A method according to any of the preceding method claims, comprising a preparatory step of attaching an alignment cone (15) about the winch cable (16) of an installation assembly (1) .

15. A method according to any of the preceding method claims, comprising a step of forming a structural connection between (102, 122, 14) between each bracket (12) and a corresponding lifting casting (10).
